# EUROPÄISCHE PATENTANMELDUNG

(11) **EP 1 182 392 A2**
(43) Veröffentlichungstag der Anmeldung: **27.02.2002**
(21) Anmeldenummer: 01117054.5
(22) Anmeldetag: 13.07.2001
(51) Int. Cl.: F16L 41/06

(54) **Anbohrgerät**

(30) Priorität: 25.08.2000 DE 10041840
(71) Anmelder: Georg Fischer Wavin AG, 4553 Subingen (CH)
(72) Erfinder: Frick, Ulrich, 78224 Singen (DE)
(74) Vertreter: Weiss, Wolfgang, Dr.

(57) **Zusammenfassung**

Es wird ein Anbohrgerät (1) mit einer Bohrvorrichtung (2) zum Herstellen eines Abgangs an einer mediumsführenden Rohrleitung (4) vorgeschlagen, an die eine Anbohrarmatur (5) angeordnet ist, und mit einer Antriebs- und Vortriebsvorrichtung (15,25,31) zum Antreiben und zum Vortreiben eines Bohrwerkzeuges (12), wobei ein Kupplungs- bzw. Entkupplungsmechanismus (28) zur Kupplung bzw. Entkupplung der Antriebsvorrichtung (31) mit der Vortriebsvorrichtung (25) für das Bohrwerkzeug (12) angeordnet ist. Das Anbohrgerät ist modular aufgebaut, in Einzelteile zerlegbar und bedienerfreundlich.

## Beschreibung

Die Erfindung bezieht sich auf ein Anbohrgerät mit einer Bohrvorrichtung zum Herstellen eines Abgangs an einer mediumsführenden Rohrleitung an die eine Anbohrarmatur angeordnet ist, und mit einer Antriebs- und Vortriebsvorrichtung zum Antreiben und zum Vortreiben eines Bohrwerkzeuges.

Im Rohrleitungsbau, insbesondere im kommunalen Rohrleitungsbau, werden die Versorgungssysteme für Wasser und Gas unterirdisch verlegt. Die Hauptrohrleitungen des Systems werden in den mit Wohnungen überbauten Bezirken zuerst entlang den Hauptstrassen verlegt und je nach Fortschritt der Überbauung werden die Nebenleitungen zu den Nebenstrassen und die Hausanschlüsse als Abzweigungen angeschlossen. Für den Betrieb der Hauptrohrleitung ist es vorteilhaft, dass bei der Erstellung der Abzweigungen die Hauptrohrleitung im betriebsfähigen Zustand, das heisst mediumsführend und unter Betriebsdruck, bleiben kann. Für kleinere Rohrdurchmesser sind bereits Anbohrarmaturen in Kombination mit Abgangsstutzen und Ventile und mit einfachen, einmalig zu verwendenden Anbohrgeräten bekannt.

Aus der DE-A-38 38 435 ist ein gattungsgemässes Anbohrgerät für unter Druck stehenden Gasleitungen bekannt. Das Anbohrgerät besteht aus einem universalen Bohrwerkzeug, das mit einer Bohrstange verbunden ist, die über dessen Gesamtlänge von einen Hohlwelle umgeben ist. Die Hohlwelle ist wiederum von einer mehrteiligen Hülse umgeben. Die Hülsenteile sind gegeneinander verschraubt und weisen unterschiedliche Gewindesteigungen auf. Einzelne Hülsenteile können mit der Hohlwelle und der Bohrstange gekuppelt werden. Die Kupplung funktioniert mit Federn, Verzahnungen oder Reibbelege. Durch die unterschiedliche Steigung wird es möglich mit einem einzelnen Bohrwerkzeug unterschiedliche Werkstoffe anzubohren. Die Verwendung dieses Bohrgerätes bei unter Druck stehenden Leitungen setzt voraus, dass über der anzubohrenden Stelle an der Hauptrohrleitung bereits ein Ventil oder eine Schleuse vorhanden ist. Für den Antrieb der Bohrstange ist einen Schlüssel notwendig.

Ausgehend von diesem Stand der Technik ist es Aufgabe der Erfindung, ein Anbohrgerät mit einer Bohrvorrichtung zum Herstellen eines Abgangs an einer mediumsführenden Rohrleitung anzugeben, das besonders bedienerfreundlich aufgebaut ist und das auch bei grösseren Rohrleitungsdurchmessern eingesetzt werden kann.

Diese Aufgabe wird gelöst durch ein Anbohrgerät mit einer Bohrvorrichtung zum Herstellen eines Abgangs an einer mediumsführenden Rohrleitung an die eine Anbohrarmatur angeordnet ist, und mit einer Antriebs- und Vortriebsvorrichtung zum Antreiben und zum Vortreiben eines Bohrwerkzeuges, wobei ein Kupplungs-bzw. Entkupplungsmechanismus zur Kupplung bzw. Entkupplung der Antriebsvorrichtung mit der Vortriebsvorrichtung für das Bohrwerkzeug angeordnet ist.

Bevorzugte Weiterbildungen der Erfindung ergeben sich aus den abhängigen Ansprüchen.

Es ist von Vorteil, dass das Anbohrgerät ein möglichst leichtes Gewicht und möglichst kleine Abmessungen aufweist. Je kleiner die Abmessungen und das Gewicht des Gerätes, desto einfacher lasst sich es von Baustelle zur Baustelle transportieren. Ein Anbohrgerät mit einer kleinen Baulänge wird mit Vorteil in Baugruben eingesetzt, in die die Hauptleitung seitlich angebohrt und zur Seite abgezweigt werden muss. Für die Erstellung der Baugrube kann Grabarbeit, die teuer ist und an der Strassenoberfläche immer hässliche Spuren zurücklässt, gespart werden. Dies wird dadurch erreicht, dass ein Grundrahmen ausgebildet ist, der lösbar verbindbar und im Wesentlichen parallel zur Rohrleitung angeordnet ist, wobei zwischen dem Grundrahmen und der Rohrleitung ein austauschbares und mit der Anbohrarmatur verbindbares im Wesentlichen zylindrisches Durchgangsteil für das Bohrwerkzeug angeordnet ist, und dass eine Bohrstange zur auswechselbaren Verbindung des Bohrwerkzeuges mit der Antriebs- und Vortriebsvorrichtung vorgesehen ist. Dies wird auch dadurch erreicht, dass der Grundrahmen mittels Spanngurte mit der Rohrleitung lösbar verbindbar angeordnet ist, wobei der Grundrahmen eine Spannvorrichtung mit einer Feineinstellung für die Spanngurte aufweist.

Es ist auch von Vorteil, dass das Anbohrgerät wahlweise bei drucklosen und bei mit Druck beaufschlagten Rohrleitungen eingesetzt werden kann. Dies wird dadurch erreicht, dass das austauschbare Durchgangsteil wahlweise als ein Distanzstück oder als eine Absperrvorrichtung ausgebildet ist. Dies wird auch dadurch erreicht, dass die Absperrvorrichtung als ein Kugelventil oder ein Schieber ausgebildet ist.

Es ist auch von Vorteil, dass das gleiche Anbohrgerät bei unterschiedlich grossen Rohrleitungsdurchmessern eingesetzt werden kann. Dies wird dadurch erreicht, dass das Anbohrgerät modular aufgebaut ist und insbesondere in den Einzelteilen wie Grundrahmen, Durchgangsteil, Bohrstange, Bohrwerkzeug und Antriebs- und Vortriebsvorrichtung zerlegbar und transportierbar ist.

Ein Ausführungsbeispiel der Erfindung wird anhand der Figuren beschrieben. Es zeigen:
Figur 1 einen Schnitt durch ein erfindungsgemässes Anbohrgerät,
Figur 2 einen vergrösserten Schnitt durch die Antriebs- und Vortriebsvorrichtung des Anbohrgerätes von Figur 1,
Figur 3 einen Schnitt durch ein zweites Ausführungsbeispiel eines Anbohrgerätes und
Figur 4 einen Schnitt durch ein drittes Ausführungsbeispiel eines Anbohrgerätes.

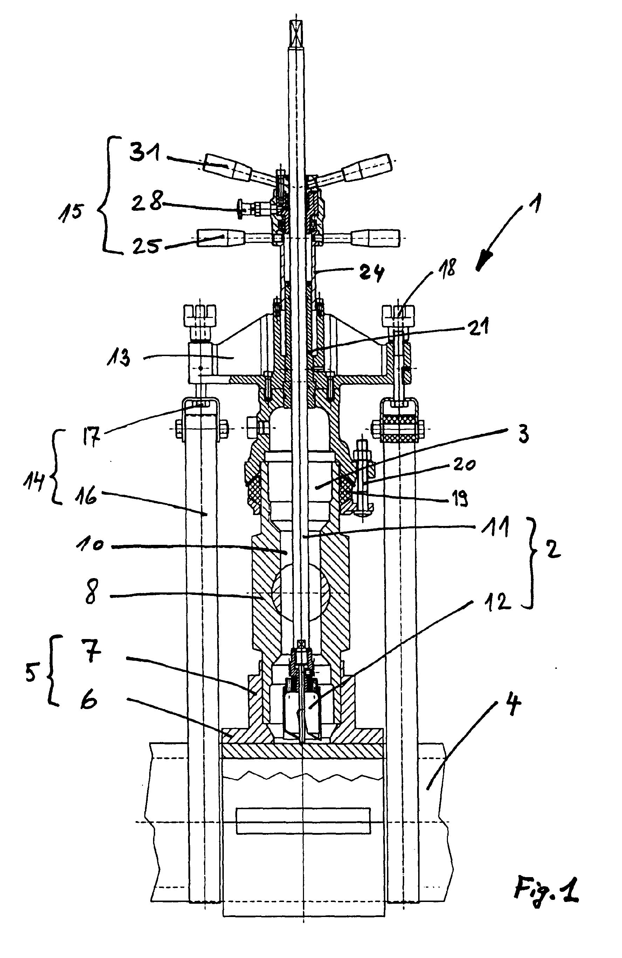

In Figur 1 ist ein Anbohrgerät 1 mit einer Bohrvorrichtung 2 zum Herstellen eines Abgangs 3 an einer mediumsführenden Rohrleitung 4 geschnitten dargestellt. In Figur 1 wird davon ausgegangen, dass das Medium, das in der Hauptrohrleitung 4 gefördert wird, einen von der Umgebung abweichenden Druck aufweist. Die Hauptrohrleitung 4 kann eine Druckleitung oder eine Vakuumleitung sein. Das Medium kann flüssig oder gasförmig sein. Die Hauptrohrleitung 4 ist an der Stelle, an die der Abgang 3 angeschlossen werden soll, mit einer Anbohrarmatur 5 versehen. Die Anbohrarmatur 5 besteht aus einem sattelförmigen Teil 6, das wie ein Sattel auf den Aussenumfang der Hauptrohrleitung 4 passt, und aus einem Stutzen 7, der einstückig mit dem Sattelteil 6 verbunden ist und unter einem Winkel von der Hauptrohrleitung 4 wegführt. Das Sattelteil 6 der Anbohrarmatur 5 kann, wenn das Rohrleitungssystem aus Kunststoff hergestellt ist, mittels einer Elektroschweissverbindung mit der Hauptrohrleitung 4 verbunden sein. Die Anbohrarmatur 5 wird vor der Anwendung des Anbohrgerätes 1 mediumsdicht und druckfest mit der Hauptrohrleitung 4 verbunden.

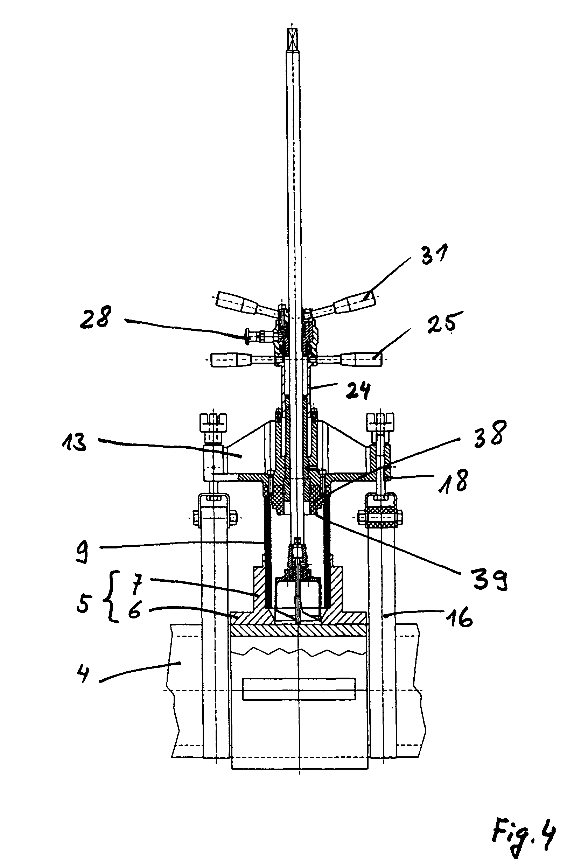

Das Anbohrgerät 1 ist modular aufgebaut und kommt in Einzelteilen zerlegt zum Einsatzort. Wenn die Hauptrohrleitung 4 mit Druck beaufschlagt ist, wird zuerst ein Kugelventil 8 in den Stutzen 7 eingesetzt. Wenn die Hauptrohrleitung 4 beim Anbohrvorgang drucklos ist, kann auch, wie in Figur 4 dargestellt, ein Distanzstück 9, beispielsweise aus Polyethylen oder Polypropylen, verwendet werden. Das Kugelventil 8 oder das Distanzstück 9 werden als Einzelteile an dem Einsatzort des Anbohrgerätes 1 mitgebracht. Wenn die Hauptrohrleitung 4 mit Druck beaufschlagt ist, bleibt die Absperrvorrichtung 8 nach dem Anbohrvorgang mit der Hauptrohrleitung 4 verbunden. Wenn die Hauptrohrleitung 4 beim Anbohrvorgang drucklos ist, wird das Distanzstück 9 nach dem Anbohrvorgang aus dem Stutzen 7 entfernt und mit dem Anbohrgerät 1 zum nächsten Arbeitsplatz mitgenommen.

Die Verbindung zwischen dem Stutzen 7 und der Absperrvorrichtung 8 kann mittels Verklebung, Verschraubung oder, wie die Verbindung zwischen dem Sattelteil 6 mit der Hauptrohrleitung 4, mittels einer Elektroschweissverbindung hergestellt werden. Das Kugelventil 8 dient während des Anbohrvorganges einer druckbeaufschlagten Rohrleitung 4 als ein mediumsdichtes Durchgangsteil 10 für die Bohrvorrichtung 2. Nach dem Anbohrvorgang wird die Bohrvorrichtung 2 aus dem Durchgangsteil 10 vorsichtig nach oben abgezogen, so dass die Absperrvorrichtung 8 geschlossen werden kann.

Die Bohrvorrichtung 2 besteht im Wesentlichen aus einer Bohrstange 11 und einem Bohrwerkzeug 12. Das Bohrwerkzeug 12 ist als ein Kernbohrer ausgebildet und ist über ein Gewinde lösbar mit der Bohrstange 11 verbunden.

Weitere wesentlichen Einzelteile, in die das Anbohrgerät 1 zerlegt werden kann, sind von unten nach oben: ein Grundrahmen 13, eine Spannvorrichtung 14 und eine Antriebs- und Vortriebsvorrichtung 15. Die Spannvorrichtung 14 besteht aus Spanngurten 16, die leicht transportiert werden können und auf der Baustelle um die Hauptrohrleitung gelegt werden, und aus einer Befestigung 17 mit einer Feineinstellung 18 mit einem Gewinde.

Der Grundrahmen 13 kann als ein Metallgussteil ausgebildet sein, das im wesentlichen parallel zur Rohrleitung 4 angeordnet ist. Zwischen dem Grundrahmen 13 und der Rohrleitung 4 verläuft die Bohrstange 11 durch das zylindrische Durchgangsteil 10, das in Figur 1 als Kugelventil 8 ausgebildet ist. Die Spanngurte 16 sorgen während des Anbohrvorganges für die Befestigung des Anbohrgerätes 1 an die Hauptrohrleitung 4. Die Spanngurte 16 dienen für die eher gröberen Fixierung und Parallelausrichtung des Grundrahmens 13. Die Feineinstellung 18 dient vor allem für die gewünschte präzise Ausrichtung und Führung der Bohrvorrichtung 2 während des Bohrvorganges. Die Feineinstellung 18 kann, wenn die Bohrvorrichtung 2 nicht in die gewünschte Richtung arbeitet, auch während des Bohrvorganges zur genaueren Einstellung betätigt werden. Der Grundrahmen 13 ist während des Anbohrvorganges im Bereich des Abganges 3 mittels Dichtungen 19 und Klemmschrauben 20 lösbar mit dem Durchgangsteil 10, hier das Kugelventil 8, verbunden. Im Grundrahmen 13 ist auch eine zylindrisch ausgebildete Lagerhülse 21 befestigt. Die Lagerhülse 21 ist konzentrisch mit der Bohrstange 11 im Grundrahmen angeordnet und dient zur Lagerung der Bohrstange 11 im Grundrahmen 13.

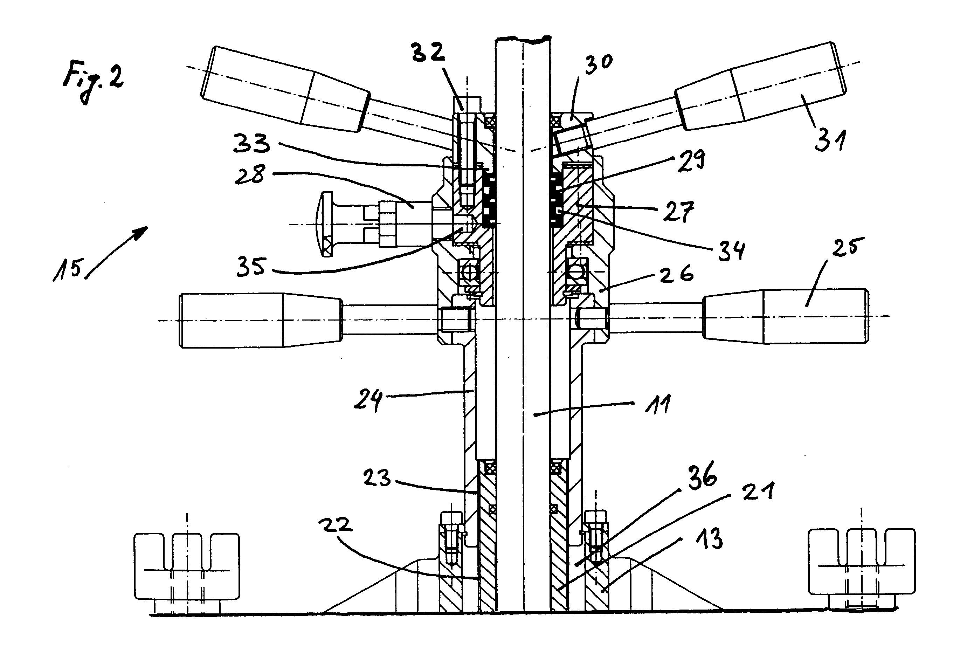

Wie in Figur 2, eine Vergrösserung des oberen Teiles von Figur 1, besser ersichtlich, weist die Lagerhülse 21 auf der die Bohrstange 11 zugewandten Seite mehrere Dichtungen zur Abdichtung des Anbohrgerätes 1 gegenüber dem Medium in der Rohrleitung 4 auf. Die Lagerhülse 21 weist auf der Aussenseite ein erstes Gewinde 22 auf, das zusammenwirkt mit einem zweiten Gewinde 23, das an einer zylindrischen Gewindebüchse 24 ausgebildet ist. Die zylindrische Gewindebüchse 24 ist ein erster wesentlicher Teil der Antriebs- und Vortriebsvorrichtung 15.

Die Antriebs- und Vortriebsvorrichtung 15 umfasst im weiteren folgende wesentlichen Teile: ein Vortriebshebel 25, ein Aufnahmeteil 26 der Gewindebüchse 24, eine Kupplungsbüchse 27, ein Kupplungs- bzw. Entkupplungsmechanismus 28, eine Druckhülse 29, eine Druckplatte 30 und einen Antriebshebel 31. Der oder die Antriebshebel 31 sind mit der Druckplatte 30 verbunden. Die Druckplatte 30 wird zusammen mit dem Antriebshebel 31 konzentrisch um die Bohrstange 11 angeordnet. Die Druckplatte wird beim Zusammenbau des Anbohrgerätes 1 am oberen Ende der Bohrstange 11 aufgeschoben und kann mittels Schrauben 32 an die Kupplungsbüchse 27 befestigt werden.

Die Druckplatte 30 weist einen ringförmigen Vorsprung 33 auf, die beim Zusammenschrauben in einer ebenso ringförmigen Aufnahme 34 der Kupplungsbüchse 27 eingreift. Die Druckhülse 29 wird vor dem Zusammenbau lose in die Aufnahme 34 der Kupplungsbüchse 27 eingelegt. Die Druckhülse 29 ist im Querschnitt mäanderförmig oder wie ein Faltenbalg ausgebildet.

Die besondere Form der Druckhülse 29 bewirkt, dass beim Zusammenschrauben der Druckplatte 30 mit der Kupplungsbüchse 27 die Druckhülse 29 derart federnd verformt und in die Aufnahme 34 verspannt wird, dass die Bohrstange 11 in die Kupplungsbüchse 27 fixiert wird. Die Kraft, die durch die Druckplatte 30 beim Zusammenschrauben in axialer Richtung auf die Druckhülse 29 ausgeübt wird, resultiert in eine Kraft in radialer Richtung, die auf die Bohrstange 11 und auf die Kupplungsbüchse 27 wirkt. Wenn die Druckplatte 30 gelöst wird, federt die Druckhülse 29 zurück und die Bohrstange 11 kann in der Richtung der Achse der Bohrstange gegenüber der Antriebs- und Vortriebsvorrichtung 15 verschoben werden. Diese axiale Verschiebung ist vorteilhaft für einen schnellen Vorschub oder Austausch der Bohrstange 11 vor oder nach dem eigentlichen Schritt des Anbohrens. Auch der Zusammenbau der Bohrvorrichtung 2 mit der Antriebs- und Vortriebsvorrichtung 15 wird durch die federnde Druckhülse 29 und durch die lösbare Verbindung weiter vereinfacht.

Im zusammengebauten Zustand ist die Bohrstange 11 kraftschlüssig verbunden mit der Druckhülse 29, mit der Kupplungsbüchse 27, mit der Druckplatte 30 und mit dem Antriebshebel 31. Die Drehbewegung des Antriebshebels 31 hat eine Drehbewegung der Bohrstange 11 um der Bohrstangenachse zur Folge. Der Antriebshebel 31, die Druckplatte 30, die Kupplungsbüchse 27 und die Druckhülse 29 bilden zusammen im Wesentlichen die Antriebsvorrichtung.

Die Drehbewegung des Antriebshebels 31 hat jedoch nicht ohne weiteres eine Bewegung in der Richtung der Bohrstangenachse zur Folge. Hierzu muss die Bewegung des Antriebshebels 31 mit der Bewegung des Vortriebshebels 25 gekoppelt werden. Zur Kupplung der beiden Bewegungen dient der Kupplungs-bzw. Entkupplungsmechanismus 28, hier dargestellt als ein Rastbolzen 28, der in einer Aussparung 35 der Kupplungsbüchse 27 eingreifen kann. Der Rastbolzen 28 ist federnd bewegbar und verrastbar im Aufnahmeteil 26 der Gewindebüchse 24 angeordnet.

Wenn der Rastbolzen 28 nicht in die Aussparung 35 eingreift, können der Antriebshebel 31 und der Vortriebshebel 25 unabhängig voneinander betätigt werden. Der Vortriebshebel 25, die Gewindebüchse 24 und das damit fest verbundene Aufnahmeteil 26 der Gewindebüchse 24 bilden zusammen im Wesentlichen die Vortriebsvorrichtung. Die Gewindebüchse 24 weist auf der Innenseite das zweite Gewinde 23 auf, das mit dem ersten Gewinde 22 der Lagerhülse 21 zusammenwirkt. Durch das Austauschen der Lagerhülse 21 und der Gewindebüchse 24 gegen eine entsprechende Kombination mit einer anderen Steigung der Gewinden 22, 23 kann das Anbohrgerät 1 einfach an Rohrleitungswerkstoffen mit unterschiedlichen Härten angepasst werden. Die Gewindebüchse 24 ist durch die Betätigung des Vortriebshebels 25 auf einer Schraubenlinie verschiebbar in einem ringförmigen Aufnahmeraum 36, der zwischen dem in diesen Bereich zylindrisch ausgebildeten Grundrahmen 13 und dem oberen Ende der zylindrischen Lagerhülse 21 gebildet wird. Der ringförmige Aufnahmeraum 36 dient auch zur besseren Führung der Bohrstange 11.

Auf der Aussenseite der Gewindebüchse 24 können Markierungen angebracht werden, die den Vorschub der Gewindebüchse 24 in Bezug auf dem Grundrahmen 13 und somit auch den Vorschub des Bohrwerkzeuges 12 in Bezug auf der Wand der Rohrleitung 4 anzeigen.

Wenn der Rastbolzen 28 in die Aussparung 35 der Kupplungsbüchse 27 eingreift, sind die Bewegungen des Antriebshebels 31 und des Vortriebshebels 25 miteinander gekoppelt und die Bohrstange 11 und das Bohrwerkzeug 12 bewegen sich auf einer Schraubenlinie nach unten in das Material der Wand der Rohrleitung 4. Wenn der Widerstand beim Anbohrvorgang zu hoch wird, können die zwei Bewegungen Vortrieb und Antrieb voneinander entkoppelt werden in dem man den Rastbolzen 28 federnd ausrasten lässt. Anschliessend kann der Antriebshebel 31, der dann vom Vortriebshebel 25 entkoppelt ist, für sich alleine betätigt werden. Der Widerstand beim Anbohren wird dabei kleiner, weil das Bohrwerkzeug 12 ohne Vorschub ins Material der Rohrleitungswand schneidet.

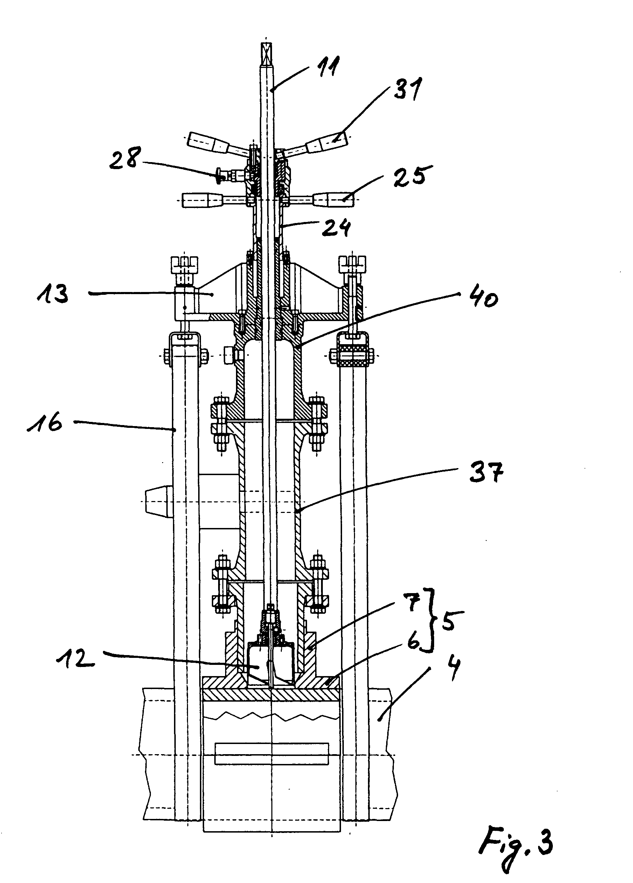

In Figur 3 ist ein Ausführungsbeispiel des Anbohrgerätes 1 von Figur 1 dargestellt. Der Unterschied im vergleich mit Figur 1 besteht darin, dass das Durchgangsteil 10 als einen Flanschschieber 37 ausgebildet ist. In Figur 3 ist für die Verbindung des Grundrahmens 13 mit dem Flanschschieber 37 auf der Unterseite des Grundrahmens 13 eine Adapterglocke 40 oder eine Flanschglocke dargestellt, die auf dessen Unterseite einen Flansch mit Schrauben aufweist, die in Übereinstimmung mit dem Flanschbild des Flanschschiebers 37 angeordnet sind. Durch Austausch der Adapterglocke 40 kann das Anbohrgerät 1 auch für Schieber 37 anderer Bauart und anderer Nenndurchmesser angepasst werden.

In Figur 4 ist ein weiteres Ausführungsbeispiel des Anbohrgerätes 1 von Figur 1 dargestellt. In Figur 4 ist an Stelle einer Absperrvorrichtung, wie beispielsweise der Flanschschieber 37 von Figur 3 oder das Kugelventil 8 von Figur 1 ein einfaches Distanzstück 9 dargestellt. Das Ausführungsbeispiel von Figur 4 wird vor allem bei drucklosen Rohrleitungen 4 verwendet. Wenn drucklose Rohrleitungen angebohrt werden, ist die Gefahr des entweichenden Mediums aus der Rohrleitung 4 nicht vorhanden. Das Distanzstück 9 wird nach dem Anbohrvorgang von der Anbohrarmatur 5 gelöst und gehört zum Anbohrgerät 1. Um der gleiche Grundrahmen 13 bei unterschiedlichen Durchmessern der Abgänge 3 verwenden zu können, ist in Figur 4 eine Adapterscheibe 38 dargestellt, die auf der der Rohrleitung 4 zugewandten Seite ringförmige Abstufungen 39 aufweist. Mit den Abstufungen 39 an der Adapterscheibe 38 wird erreicht, dass eine Vielzahl von Distanzstücken 9 mit unterschiedlichen Nenndurchmessern mit der gleichen Adapterscheibe 38 und dem gleichen Grundrahmen 13 verbunden werden können.

Mit dem hier vorgeschlagenen Anbohrgerät 1 ist es möglich, Rohrleitungen mit grösseren Durchmesser anzubohren. Das Anbohrgerät 1 ist anpassungsfähig und modular aufgebaut und kann in Einzelteilen zerlegt werden. Die Einzelteile sind leicht zu transportieren und können einfach ausgetauscht werden gegen unterschiedlichen Einzelteilen, die für anderen Betriebsbedingungen erforderlich sind. Durch die Entkopplung der zwei Funktionen Vortrieb und Antrieb wird eine dem Material schonenden Arbeitsweise, sowohl für das Bohrwerkzeug 12 als auch für das Material der Wand der Rohrleitung 4, gewährleistet.

## Patentansprüche

1. Anbohrgerät (1) mit einer Bohrvorrichtung (2) zum Herstellen eines Abgangs an einer mediumsführenden Rohrleitung (4) an die eine Anbohrarmatur (5) angeordnet ist, und mit einer Antriebs- und Vortriebsvorrichtung (15,25,31) zum Antreiben und zum Vortreiben eines Bohrwerkzeuges (12), **dadurch gekennzeichnet, dass** ein Kupplungs- bzw. Entkupplungsmechanismus (28) zur Kupplung bzw. Entkupplung der Antriebsvorrichtung (31) mit der Vortriebsvorrichtung (25) für das Bohrwerkzeug (12) angeordnet ist.

2. Anbohrgerät zum Herstellen eines Abgangs an einer mediumsführenden Rohrleitung nach dem Anspruch 1, **dadurch gekennzeichnet, dass** ein Grundrahmen (13) ausgebildet ist, der lösbar verbindbar und im Wesentlichen parallel zur Rohrleitung angeordnet ist, wobei zwischen dem Grundrahmen und der Rohrleitung ein austauschbares und mit der Anbohrarmatur (5) verbindbares im Wesentlichen zylindrisches Durchgangsteil (10) für das Bohrwerkzeug (12) angeordnet ist, und dass eine Bohrstange (11) zur auswechselbaren Verbindung des Bohrwerkzeuges mit der Antriebs- und Vortriebsvorrichtung (15) vorgesehen ist.

3. Anbohrgerät zum Herstellen eines Abgangs an einer mediumsführenden Rohrleitung nach dem Anspruch 1 oder 2, **dadurch gekennzeichnet, dass** im Grundrahmen konzentrisch zur Bohrvorrichtung (2) eine zylindrische ausgebildeten Lagerhülse (21) zur Lagerung der Bohrstange (11) angeordnet ist, wobei die Lagerhülse auf der Aussenseite ein erstes Gewinde (22) aufweist.

4. Anbohrgerät zum Herstellen eines Abgangs an einer mediumsführenden Rohrleitung nach einem der Ansprüche 1 bis 3, **dadurch gekennzeichnet, dass** die Antriebs- und Vortriebsvorrichtung (15) eine konzentrisch zur Bohrstange (11) angeordnete, mediumsdichte und zylindrisch ausgebildete Gewindebüchse (24) aufweist, die auf der Innenseite mit einem zweiten mit dem ersten Gewinde (22) derart zusammenwirkenden Gewinde (23) ausgebildet ist, dass die Bohrstange (11) um die Bohrstangenachse drehbar und/oder in Richtung der Achse verschiebbar in Bezug auf die Lagerhülse (21) im Grundrahmen (13) angeordnet ist.

5. Anbohrgerät zum Herstellen eines Abgangs an einer mediumsführenden Rohrleitung nach einem der Ansprüche 1 bis 4, **dadurch gekennzeichnet, dass** die Vortriebsvorrichtung der Bohrvorrichtung einen Vortriebshebel (25) aufweist, der mit einem Aufnahmeteil (26) der Gewindebüchse (24) verbunden ist und wobei der Aufnahmeteil (26) die Antriebsvorrichtung und den Kupplungs- bzw. Entkupplungsmechanismus (28) aufnimmt.

6. Anbohrgerät zum Herstellen eines Abgangs an einer mediumsführenden Rohrleitung nach einem der Ansprüche 1 bis 5, **dadurch gekennzeichnet, dass** die Antriebsvorrichtung einen Antriebshebel (31), eine Druckplatte (30), eine Druckhülse (29) und eine Kupplungsbüchse (27) umfasst, wobei der Antriebshebel (31) mit der konzentrisch um die Bohrstange (11) angeordneten Druckplatte (30) verbunden ist, wobei die Druckplatte (30) in Richtung der Bohrstangenachse bewegbar angeordnet ist und mittels Schrauben (32) mit der Kupplungsbüchse (27) verbindbar angeordnet ist, wobei die Druckhülse (29) durch die Verschraubung der Druckplatte (30) mit der Kupplungsbüchse (27) sich derart verformt, dass die Bohrstange (11) kraftschlüssig mit der Kupplungsbüchse (27) und mit dem Antriebshebel (31) verbindbar ist, wobei die Kupplungsbüchse in den Aufnahmeteil (26) der Antriebsvorrichtung gelagert ist und wobei die Kupplungsbüchse eine Aussparung (35) zur Aufnahme des Kupplungs- bzw. Entkupplungsmechanismus (28) aufweist.

7. Anbohrgerät zum Herstellen eines Abgangs an einer mediumsführenden Rohrleitung nach einem der Ansprüche 1 bis 6, **dadurch gekennzeichnet, dass** das austauschbare Durchgangsteil (10) wahlweise als ein Distanzstück (9) oder als eine Absperrvorrichtung (8,37) ausgebildet ist.

8. Anbohrgerät zum Herstellen eines Abgangs an einer mediumsführenden Rohrleitung nach dem Anspruch 7, **dadurch gekennzeichnet, dass** die Absperrvorrichtung als ein Kugelventil (8) oder ein Schieber (37) ausgebildet ist.

9. Anbohrgerät zum Herstellen eines Abgangs an einer mediumsführenden Rohrleitung nach einem der Ansprüche 1 bis 8, **dadurch gekennzeichnet, dass** das Anbohrgerät modular aufgebaut ist und insbesondere in den Einzelteilen wie Grundrahmen (13), Durchgangsteil (10), Bohrstange (11), Bohrwerkzeug (12) und Antriebs- und Vortriebsvorrichtung (15) zerlegbar und transportierbar ist.

10. Anbohrgerät zum Herstellen eines Abgangs an einer mediumsführenden Rohrleitung nach einem der Ansprüche 1 bis 9, **dadurch gekennzeichnet, dass** der Grundrahmen (13) mittels Spanngurte (16) mit der Rohrleitung (4) lösbar verbindbar angeordnet ist, wobei der Grundrahmen (13) eine Spannvorrichtung (17) mit einer Feineinstellung (18) für die Spanngurte (16) aufweist.
